# EUROPEAN PATENT SPECIFICATION

(11) **EP 1 312 289 B1**
(45) Date of publication and mention of the grant of the patent: **17.11.2004**
(21) Application number: 01984396.0
(22) Date of filing: 24.07.2001
(51) Int. Cl.: A47J 27/21

(54) **A TEMPERATURE CONTROLLER FOR A LIQUID HEATER**
TEMPERATURREGLER FÜR EINEN WASSERKEIZER
CHAUFFE-EAU UTILISANT UN SYSTEME DE COMMANDE DE LA TEMPERATURE

(30) Priority: 25.07.2000 CN 00121851
(43) Date of publication of application: 21.05.2003
(73) Proprietor: Liu, Xinhao, Ningbo City, Zhejiang Province 315613 (CN)
(72) Inventor: LIU, Wengao, Ningbo City, Zhejiang Province 315613 (CN)
(74) Representative: Bloch, Gérard
(86) International application number: PCT/CN2001/001199
(87) International publication number: WO 2002/009561

(56) References cited:
- EP-A- 0 528 656
- WO-A-95/34187
- CN-Y- 2 193 113
- CN-Y- 2 213 502
- CN-Y- 2 217 357
- CN-Y- 2 252 587
- CN-Y- 2 344 891
- CN-Y- 2 364 808
- CN-Y- 2 370 449
- DE-B- 1 243 358
- GB-A- 2 149 217
- US-A- 4 539 468

## Description

This invention relates to a temperature controller for a liquid heater.

In the temperature controller for the liquid heater, such as electric boiling kettles, bimetal strip is used as the temperature-sensitive element for the protector. The liquid heater generally has the functions of protection of automatic switch-off on boiling, automatic switch-off on dry-heating and optional fusing. Such a liquid heated is disclosed in DE-B-1 243 358 and WO-A-05/34187. A similar construction was disclosed in the Patent Application No. 98225213.7 entitled "Warning Plug for Dual-protection Electric Boiling Kettle", whose primary shortcoming is that the switch-off protection on dry-heating is of a self-reset design. That is, when heating without water, the temperature of the heating element rises abnormally high, and the bimetal strip for dry-heating protection is actuated to act on a movable contact blade through a ram. As the acting force applied by the bimetal strip is larger than the resilient force of the movable contact blade itself, the electric circuit is maintained open. When the temperature decreases to a certain extent, the bimetal strip is restored and the action on the movable contact blade is removed, thus the movable contact blade is restored under its own elastic force so that the circuit is switched on once more. A self-reset switch-off protection on dry-heating is in this way accomplished. Such a repeated action may result in the damage of the liquid heater and even may cause a more serious result. Furthermore, regardless of the switch-off on boiling or the switch-off on dry-heating, the temperature controller is switched off in only one pole of the electric circuit, which is not an ideal, full-open manner.

The object of the present invention is to overcome the disadvantage in the prior art and provide a safer and more reliable non-self-reset temperature controller for a liquid heater.

The object is achieved by a temperature controller according to independent claim 1.

The push rod and the circuit breaking ram may be integrated into a single component.

The link rod and the circuit breaking ram may be integrated into a single component.

The link rod and the dry-heating protection ram may be integrated into a single component.

The push rod and the circuit breaking ram may be integrated into a single component. The link rod and the dry-heating protection ram may be integrated into a single component.

The link rod, the circuit breaking ram and the dry-heating protection ram may be integrated into a single component.

The circuit breaking ram acts on the movable contact blade of any of the poles.

The circuit breaking ram acts simultaneously on the movable contact blades of both of the poles.

The temperature controller is further provided with a fuse protection means composed of a safety spring and a fuse, for a protective fusing in case of the failure of the above described functions. The safety spring is embedded in the housing, an extension end of which extends into between the movable contact blade and the fixed contact blade. The fuse is movably fitted in a corresponding shaft hole, and is in contact with the electric heating element while compressing against the safety spring.

Since the mechanism of switch-off protection on dry-heating has been improved according to the present invention, the original design in which the dry-heating protection ram acts directly on the movable contact blade is advantageously changed to the design in which the action of the dry-heating protection ram is transferred to the movable contact blade through the link rod and the circuit breaking ram. Therefore, the on/off state of the circuit is not directly affected by the bimetal strip for dry-heating protection any more. The present invention overcomes the shortage of the means for switch-off on dry-heating in the prior art by substituting the self-reset design with a manual reset design which is not of self-reset type so that the damage of the liquid heater and even the condition of potential serious insecurity resulting from the repeated switching on/off of the heater. Furthermore, the circuit breaking ram may acts on the movable contact blade(s) on either of or on both of the poles, and in the latter case the both of the poles will be disconnected, which meets the safety criterion on domestic electrical appliance set by the state much more.

The present invention will be described in detail by means of an embodiment and with reference to the accompanying drawings.
Fig. 1 is a view of a temperature controller for a liquid heater according to the present invention illustrating an open circuit state.
Fig. 2 is a right side view of the temperature controller of Fig. 1.
Fig. 3 is a left side view of the temperature controller of Fig. 1.
Fig. 4 is a view of a temperature controller for a liquid heater according to the present invention illustrating a close circuit state.

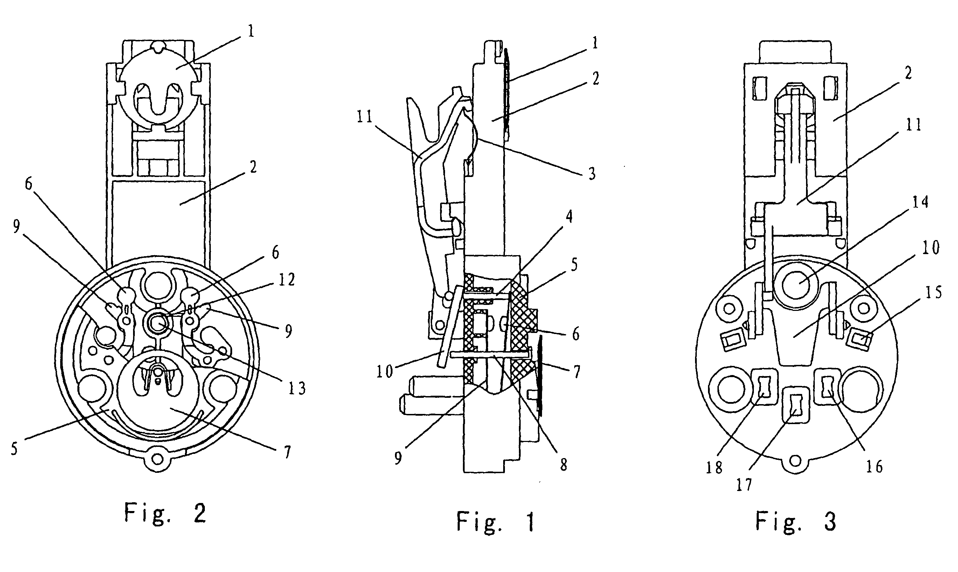

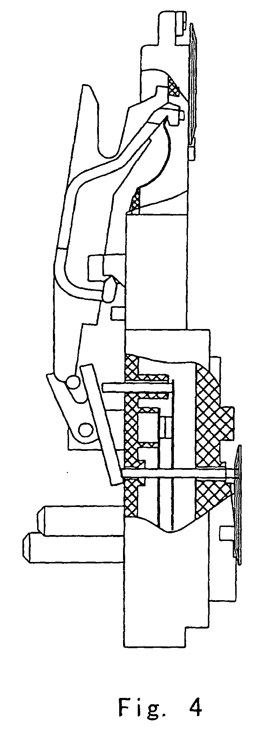

As shown in Figs. 1-4, a temperature controller for a liquid heater includes a housing (2) and a cover (5) both made of fire-resistant material, which are secured to each other with screws and connected to the heating element through three mounting openings (14). Two movable contact blades (6) and two fixed contact blades (9) are provided in the housing, and two poles of the heating element (not shown) are in contact with the movable contact blade or fixed contact blades of N-pole and L-pole respectively. In this embodiment, the poles of the heating element are in contact with the movable contact blades. A three-pin plug with N-pin (18), L-pin (16) and ground-pin (17) is provided in the bottom portion of the housing and is connected to a power supply.

A bimetal strip for boiling protection (1) for sensing the temperature of boiling water to accomplish a switch-off protection on boiling is fitted in a lock in the upper portion of the housing. The acting force thereof is transferred by a push rod (11), which is hinged to the back side of the housing, and a push rod spring (3), which is embedded at its opposite ends in the housing and a groove in the push rod, and acts through a link rod (10), which is hinged to the housing, and a circuit breaking ram (4) to separate the movable contact blade from the fixed contact blade. The circuit is switched on again by manually pressing the push rod.

A bimetal strip for dry-heating protection (7) for sensing the temperature of the electric heating element to accomplish a switch-off protection on dry-heating is fitted into the cover and secured to it away from the center thereof, and is in contact with the electric heating element. The acting force thereof is transferred by a dry-heating protection ram (8), which is supported in shaft holes of the housing and the cover, and acts through the link rod and circuit breaking ram to separate the movable contact blade from the fixed contact blade, thereby switching off the circuit. In order to switch on the circuit again, it is necessary to press the push rod by hand for releasing the pressure on the link rod applied by the push rod, thereby causing the movable contact blade to restore elastically to contact with the fixed contact blade so that the circuit is closed again. If the pressure on the link rod applied by the push rod is not released, the movable contact blade will not reset by itself, therefore creating a protection mechanism of non-self-reset type.

The bimetal strip for boiling protection (1) and the bimetal strip for dry-heating protection (7) according to the present invention are instantly deformable bimetal strips. That is, when the temperature of the bimetal strip reaches to a predetermined temperature, the strip will turn over, i.e., an original concave side is changed to a convex side and vice versa. When it is cooled, it restores to its original state.

When urging the movable contact blade (6) to separate from the fixed contact blade (9), the circuit breaking ram (4) may be designed to act on the movable contact blade of one pole and disengage one of the movable and fixed contact blade pairs. However, it may be designed to act on the movable contact blades of both of the poles and disengage both of the movable and fixed contact blade pairs. The latter scheme is adopted in the embodiment of the present invention thereby to enhance the safety of the liquid heater.

Indicator lamps, which indicate an operation stop and a dry-heating warning, are mounted in indicator lamp holes (15), and two terminals of each indicator lamp are connected to the two poles of the electric heating element respectively.

The temperature controller is further provided with a fuse protection means, which is composed of a safety spring (12) and a fuse (13), for effecting a protective fusing when the above described functions fail. The safety spring is fitted in the housing, one extension end of which extends into between the movable contact blade and the fixed contact blade. The fuse is movably fitted in corresponding shaft holes, and is in contact with the electric heating element while compressing against the safety spring.

Now the dynamic configuration of the present invention is described as follows:

When the liquid is boiling and the steams generated acts on the bimetal strip for boiling protection, the bimetal strip deforms due to the heating and thereby acts on the push rod at its head. When the force due to the deformation is greater than that of the push rod spring, the head portion of the push rod is raised and the tail portion thereof acts on and push the link rod, which in turn urges the circuit breaking ram to separate the movable contact blade from the fixed contact blade. In this way, the electric heating element is disenergized and the indicator lamps crush out so that an automatic switch-off on boiling is achieved. In order to avoid boiling water repeatedly, the bimetal strip for dry-heating protection comes into contact with the electric heating element to sense the change in temperature. In normal condition, the deformation of the bimetal strip for dry-heating protection is not sufficient to urge the dry-heating protection ram and thus the function of switch-off protection on dry-heating is not brought into action. If it is desired to heat the liquid again after switch-off, it is necessary to press the push rod by hand so that the heating element is switched on again and begins heating.

When an inadvertent operation occurs, for example, the liquid heater is not filled with liquid or the liquid in the liquid heater is boiled dry, the temperature of the electric heating element will then increase rapidly abnormally high. Once a predetermined deformation temperature is reached, the bimetal strip for dry-heating protection is deformed and urges the dry-heating protection ram so that the acting force is transferred by the link rod, push rod and circuit breaking ram to cause the movable and fixed contact blades to disengage. Accordingly, the electric heating element is switched off and the indicator lamps crush out so that the safety protection is accomplished. At the same time, the temperature of the electric heating element decreases gradually after switching off. The bimetal strip for dry-heating protection also decreases, and the deformation thereof is removed. Nevertheless, since the separation between the movable blade and the fixed contact blade is still held by the link rod which is under the control of the push rod, the circuit will not be self-reclosed. In order to resume the closure of the circuit, i.e., the contact between the movable and fixed contact blades, it is necessary to press the push rod by hand. Therefore, a protection mechanism of non-self-reset type is obtained.

The fuse protection mechanism effects a fusing protection in case of the failure of the above two functions. Since the temperature of the electric heating element continues to increase, the fuse is caused to melt so that the safety spring resumes to make the movable contact blade to separate from the fixed contact blade. Thereby, a fuse protection is accomplished.

## Claims

1. A temperature controller for a liquid heater including a housing (2) and a cover (5) fixed to each other, wherein two pairs of movable contact blade (6) and fixed contact blade (9) are provided, two poles of an electric heating element are in contact with a N-pole contact and a L-pole contact respectively, a three-pin plug with a N-pin (18), a L-pin (16) and a ground-pin (17) is provided in a bottom portion of the housing and is connected to a power supply; a bimetal strip for boiling protection (1) for sensing the temperature of boiling water to accomplish an automatic switch-off protection is embedded in a lock in an upper portion of the housing and the acting force thereof is transferred by an elastically positioned bistable lever mechanism comprising a push rod (11), which is hinged to the housing, and a push rod spring (3), which is embedded at its opposite ends in the housing and a push rod groove, to act through a circuit breaking ram (4) to separate the movable contact blade from the fixed contact blade; a bimetal strip (7) for dry-heating protection for accomplishing a switch-off protection against dry-heating is secured to the cover, and the acting force thereof is transferred by a dry-heating protection ram (8) to make the movable contact blade separate from the fixed contact blade, the circuit breaking ram (4) and the dry-heating protection ram (8) being movably supported by the housing, **characterized in that** a link rod (10) for achieving a manual reset in case of dry-heating is provided between the push rod, the circuit breaking ram and the dry-heating protection ram which transfer the acting force, the link rod being hinged to the housing and acting on the movable contact blade through the circuit breaking ram (4) following the controlling action by the push rod and dry-heating protection ram.

2. A temperature controller for a liquid heater of claim 1, wherein said push rod and circuit breaking ram are integrated into a single component.

3. A temperature controller for a liquid heater of claim 1, wherein said link rod and circuit breaking ram are integrated into a single component.

4. A temperature controller for a liquid heater of claim 1 or 2, wherein said link rod and dry-heating protection ram are integrated into a single component.

5. A temperature controller for a liquid heater of claim 1, wherein said link rod and circuit breaking ram, and said link rod and dry-heating protection ram, are integrated into a single component, respectively.

6. A temperature controller for a liquid heater of claim 1, wherein said circuit breaking ram (4) acts on the movable contact blade (6) of any of the poles.

7. A temperature controller for a liquid heater of claim 1, wherein said circuit breaking ram (4) simultaneously act on the movable contact blades (6) of both of the poles.

8. A temperature controller for a liquid heater of claim 1, wherein said two contacts connected to the electric heating element are the movable contact blade (6) or fixed contact blade (9).

9. A temperature controller for a liquid heater of claim 1, wherein said temperature controller further includes a fuse protection mechanism, which includes a safety spring (12) embedded in the housing, an extension end of which extends into between the movable contact blade and the fixed contact blade, as well as a fuse (13) movably fitted in corresponding shaft holes and in contact with the electric heating element while compressing against the safety spring.

## Patentansprüche

1. Ein Temperaturwächter für einen Flüssigkeitserhitzer mit einem Gehäuse (2) und einer Abdeckung (5), die miteinander verbunden sind, und mit zwei Paaren von bewegbaren (6) und feststehenden Kontaktzungen (9), wobei zwei Pole eines elektrischen Heizelements in Kontakt mit einem N-Pol Kontakt beziehungsweise einem L-Pol Kontakt stehen, wobei ein Dreistift-Stecker mit einem N-Stift(18), einem L-Stift (16) und einem Massestift(17) in einem Bodenteil des Gehäuses angeordnet und mit einer Spannungsversorgung verbunden ist; wobei ein Bimetall-Streifen als Siedeschutz (1) zum Abtasten der Temperatur von siedendem Wasser für die Schaltung eines automatischen Abschalt-Schutzes in einer Verriegelungsvorrichtung in einem Oberteil des Gehäuses angeordnet ist und wobei dessen Stellkraft übertragen wird von einem elastisch positioniertem bistabilen Hebelmechanismus mit einer an dem Gehäuse angelenkten Schubstange (11) und einer Schubstangen-Feder (3), die an ihren entgegengesetzten Enden in dem Gehäuse und einer Schubstangen-Nut eingebettet ist, um über einen stromkreisunterbrechenden Stößel (4) ein Trennen der bewegbaren Kontaktzunge von der feststehenden Kontaktzunge zu bewirken; wobei ein Bimetall-Streifen (7) als Trocken-Aufheizschutz, der einen Abschalt-Schutz gegen Trocken-Aufheizung bewirkt, an der Abdeckung befestigt ist, wobei dessen Stellkraft über einen Trocken-Aufheizschutz-Stößel (8) übertragen wird, um die bewegbare Kontaktzunge von der feststehenden Kontaktzunge zu trennen, wobei der stromkreisunterbrechende Stößel (4) und der Trocken-Aufheizschutz-Stößel (8) bewegbar am Gehäuse gelagert sind,
**dadurch gekennzeichnet, daß** zum Ermöglichen eines manuellen Reset im Falle einer Trocken-Aufheizung ein Verbindungsglied (10) zwischen der Schubstange, dem Stromkreisunterbrechungs-Stößel und dem Trocken-Aufheizschutz-Stößel, welche die Stellkraft übertragen, vorgesehen ist, wobei das Verbindungsglied an dem Gehäuse angelenkt ist und unter Folgen der Steuerbetätigung durch die Schubstange und den Trocken-Aufheizschutz-Stößel über den Stromkreisunterbrechungs-Stößel (4) auf die bewegbare Kontaktzunge wirkt.

2. Ein Temperaturwächter für einen Flüssigkeitserhitzer nach Anspruch 1, wobei das Verbindungsglied und der Stromkreisunterbrechungs-Stößel in einem einzigen Bauteil integriert sind.

3. Ein Temperaturwächter für einen Flüssigkeitserhitzer nach Anspruch 1, wobei das Verbindungsglied und der Stromkreisunterbrechungs-Stößel in einem einzigen Bauteil integriert sind.

4. Ein Temperaturwächter für einen Flüssigkeitserhitzer nach Anspruch 1 oder 2, wobei das Verbindungsglied und der Trocken-Aufheizschutz-Stößel in einem einzigen Bauteil integriert sind.

5. Ein Temperaturwächter für einen Flüssigkeitserhitzer nach Anspruch 1, wobei das Verbindungsglied und der Stromkreisunterbrechiingsstößel und das Verbindungsglied und der Trocken-Aufheizschutz-Stößel jeweils in einem einzigen Bauteil integriert sind.

6. Ein Temperaturwächter für einen Flüssigkeitserhitzer nach Anspruch 1, wobei der Stromkreisunterbrechungs-Stößel (4) auf die bewegbare Kontaktzunge (6) eines der Pole einwirkt.

7. Ein Temperaturwächter für einen Flüssigkeitserhitzer nach Anspruch 1, wobei der Stromkreisunterbrechungs-Stößel (4) gleichzeitig auf die bewegbaren Kontaktzungen (6) beider Pole einwirkt.

8. Ein Temperaturwächter für einen Flüssigkeitserhitzer nach Anspruch 1, wobei die beiden mit dem elektrischen Heizelement verbundenen Kontakte die bewegbaren Kontaktzungen (6) oder die feststehenden Kontaktzungen (9) sind.

9. Ein Temperaturwächter für einen Flüssigkeitserhitzer nach Anspruch 1, wobei der Temperaturwächter ferner einen Sicherungs-Schutzmechanismus aufweist, der eine in dem Gehäuse eingeordnete Sicherheits-Feder (12), die mit einem Erweiterungsende zwischen die bewegbare Kontaktzunge und die feststehende Kontaktzunge eingreift, und eine Sicherung (13) aufweist, die bewegbar in entsprechenden Schachtöffnungen eingepaßt und in Kontakt mit dem elektrischen Heizelement steht und die Sicherheits-Feder komprimiert.

## Revendications

1. Régulateur de température pour appareil de chauffage de liquides, comprenant un boîtier (2) et un couvercle (5) fixés l'un à l'autre, dans lequel deux paires de contacts constituées chacune d'une lame mobile de contact (6) et d'une lame fixe de contact (9) sont prévues, deux pôles d'un élément chauffant électrique sont en contact avec respectivement un contact de pôle N et un contact de pôle L, une fiche à trois broches ayant une broche N (18), une broche L (16) et une broche de terre (17) est prévue dans une partie inférieure du boîtier et est reliée à une alimentation, une bilame pour protection contre l'ébullition (1) pour la saisie de la température d'eau bouillante pour réaliser une protection par coupure automatique est encastrée dans une serrure dans une partie supérieure du boîtier et la force d'action de celle-ci est transmise par un mécanisme à levier bistable positionné élastiquement comprenant une tige-poussoir (11) qui s'articule sur le boîtier et un ressort de tige-poussoir (3) qui est encastré à ses extrémités opposées dans le boîtier et une gorge de tige-poussoir, pour agir par l'intermédiaire d'un piston de coupure de circuit (4) pour séparer la lame mobile de contact de la lame fixe de contact, une bilame (7) pour protection contre le chauffage à sec pour réaliser une protection par coupure contre le chauffage à sec est fixée au couvercle, et la force d'action de celle-ci est transmise par un piston de protection contre le chauffage à sec (8) pour faire se séparer la lame mobile de contact de la lame fixe de contact, le piston de coupure de circuit (4) et le piston de protection contre le chauffage à sec (8) étant supportés mobiles par le boîtier, **caractérisé par le fait qu'**une tige de liaison (10) pour la réalisation d'un réenclenchement manuel en cas de chauffage à sec est prévue entre la tige-poussoir, le piston de coupure de circuit et le piston de protection contre le chauffage à sec qui transmettent la force d'action, cette tige de liaison s'articulant sur le boîtier et agissant sur la lame mobile de contact par l'intermédiaire du piston de coupure de circuit (4) après l'action de commande produite par la tige-poussoir et le piston de protection contre le chauffage à sec.

2. Régulateur de température pour appareil de chauffage de liquides selon la revendication 1, dans lequel la tige-poussoir et le piston de coupure de circuit sont réunis en un seul composant.

3. Régulateur de température pour appareil de chauffage de liquides selon la revendication 1, dans lequel la tige de liaison et le piston de coupure de circuit sont réunis en un seul composant.

4. Régulateur de température pour appareil de chauffage de liquides selon l'une des revendications 1 et 2, dans lequel la tige de liaison et le piston de protection contre le chauffage à sec sont réunis en un seul composant.

5. Régulateur de température pour appareil de chauffage de liquides selon la revendication 1, dans lequel d'une part la tige de liaison et le piston de coupure de circuit et d'autre part la tige de liaison et le piston de protection contre le chauffage à sec sont respectivement réunis en un seul composant.

6. Régulateur de température pour appareil de chauffage de liquides selon la revendication 1, dans lequel le piston de coupure de circuit (4) agit sur la lame mobile de contact (6) d'un quelconque des pôles.

7. Régulateur de température pour appareil de chauffage de liquides selon la revendication 1, dans lequel le piston de coupure de circuit (4) agit simultanément sur les lames mobiles de contact (6) des deux pôles.

8. Régulateur de température pour appareil de chauffage de liquides selon la revendication 1, dans lequel les deux contacts reliés à l'élément chauffant électrique sont les lames mobiles de contact (6) ou les lames fixes de contact (9).

9. Régulateur de température pour appareil de chauffage de liquides selon la revendication 1, qui comprend en outre un mécanisme de protection à fusible qui comporte un ressort de sécurité (12) encastré dans le boîtier et dont une extrémité formant rallonge entre entre la lame mobile de contact et la lame fixe de contact, ainsi qu'un fusible (13) monté mobile dans des trous d'axe correspondants et en contact avec l'élément chauffant électrique avec compression contre le ressort de sécurité.
